# EUROPÄISCHE PATENTSCHRIFT

(11) **EP 1 190 164 B1**
(45) Veröffentlichungstag und Bekanntmachung des Hinweises auf die Patenterteilung: **22.11.2006**
(21) Anmeldenummer: 00935124.8
(22) Anmeldetag: 26.05.2000
(51) Int. Cl.: F01N 9/00, F01N 11/00, F02D 41/02

(54) **VERFAHREN ZUR ERFASSUNG EINER SCHÄDIGUNG VON WENIGSTENS EINEM IN EINEM ABGASKANAL EINER VERBRENNUNGSKRAFTMASCHINE ANGEORDNETEN NOx-SPEICHERKATALYSTOR**
METHOD FOR DETECTING DETERIORATION OF AT LEAST ONE NOx STORAGE CATALYST ARRANGED IN THE EXHAUST LINE OF AN INTERNAL COMBUSTION ENGINE
PROCEDE DE DETECTION D'UNE ALTERATION D'AU MOINS UN CATALYSEUR ACCUMULATEUR DE NOx DISPOSE DANS UN CONDUIT DE GAZ D'ECHAPPEMENT D'UN MOTEUR A COMBUSTION INTERNE

(30) Priorität: 09.06.1999 DE 19926149
(43) Veröffentlichungstag der Anmeldung: 27.03.2002
(73) Patentinhaber: Volkswagen Aktiengesellschaft, 38436 Wolfsburg (DE)
(72) Erfinder: POTT, Ekkehard, D-38518 Gifhorn (DE); LANG, Axel, D-38302 Wolfenbüttel (DE); HAHN, Hermann, D-38165 Lehre (DE); SCHULZE, Frank, D-38533 Vordorf (DE)
(74) Vertreter: Pohlmann, Bernd Michael
(86) Internationale Anmeldenummer: PCT/EP2000/004811
(87) Internationale Veröffentlichungsnummer: WO 2000/077355

(56) Entgegenhaltungen:
- EP-A- 0 690 213
- EP-A- 0 903 478
- EP-A- 0 903 479
- DE-A- 19 751 895
- US-A- 5 771 685
- US-A- 5 901 552

## Beschreibung

Die Erfindung betrifft ein Verfahren zur Erfassung einer Schädigung von wenigstens einem in einem Abgaskanal in einer Verbrennungskraftmaschine angeordneten NOₓ-Speicherkatalysator mit den im Oberbegriff des Anspruchs 1 genannten Merkmalen.

Es ist bekannt, zur Reinigung eines Abgases der Verbrennungskraftmaschine Katalysatoren in dem Abgaskanal der Verbrennungskraftmaschine anzuordnen. Während eines Verbrennungsvorgangs eines Luft-Kraftstoff-Gemisches entstehen unter anderem gasförmige Schadstoffe, wie Stickoxide NOₓ, Kohlenmonoxid CO und unverbrannte Kohlenwasserstoffe HC, die an den Katalysatoren in weniger umweltrelevante Reaktionsprodukte konvertiert werden können. Allerdings lassen sich die Konvertierungsreaktionen jeweils nur auf bestimmte Gaskomponenten optimieren und zwar in Abhängigkeit von einem Arbeitsmodus der Verbrennungskraftmaschine.

Der Arbeitsmodus der Verbrennungskraftmaschine läßt sich anhand eines Lambdawertes charakterisieren, der die stöchiometrischen Verhältnisse von Sauerstoff zu einem Kraftstoff widerspiegelt. Liegt Sauerstoff in einem Überschuß vor, so ist λ > 1, und die Verbrennungskraftmaschine befindet sich in einem sogenannten mageren Arbeitsmodus. Überwiegt der Kraftstoff, so liegt ein fetter Arbeitsmodus mit λ < 1 vor, während bei stöchiometrischen Bedingungen λ = 1 ist. Eine Bildung reduzierender Gaskomponenten wie CO, HC oder H₂ ist im allgemeinen unter fetter Atmosphäre (λ < 1) begünstigt.

Reduzierende Gaskomponenten sind mit Sauerstoff oxidierbar (Konvertierungsreaktion). Eine Einstellung eines Gleichgewichts dieser Reaktion kann durch die bekannten Katalysatoren unterstützt werden. In einem Arbeitsmodus mit λ ≥ 1 werden die reduzierenden Gaskomponenten größtenteils umgesetzt und eine Emission von CO, HC oder H₂ ist relativ gering. Mit weiter sinkenden Lambdawerten - also in fetter Atmosphäre - steigen allerdings die Emissionen deutlich an.

NOₓ wird in der Konvertierungsreaktion mit den reduzierenden Gaskomponenten umgesetzt, wobei auch hier die Gleichgewichtseinstellung durch bekannte Katalysatoren optimiert werden kann. Naturgemäß kann eine weitestgehende Reduktion des NOₓ jedoch nur in einem Arbeitsmodus mit λ ≤ 1 stattfinden. Demnach können lediglich bei stöchiometrischen Bedingungen (λ = 1) beide Schadstoffgruppen, reduzierende Gaskomponenten und NOₓ, in einem ausreichenden Maße umgesetzt werden.

Moderne Verbrennungskraftmaschinen werden zwecks einer Optimierung eines Kraftstoffverbrauchs bevorzugt in dem mageren Arbeitsmodus betrieben. Um trotzdem eine NOₓ-Emission möglichst niedrig zu halten, ist bekannt, das NOₓ in NOₓ-Speichern zu absorbieren. Die NOₓ-Speicher können auch direkt mit den die Konvertierungsreaktion von NOₓ unterstützenden Katalysatoren zusammengefaßt werden zu den bekannten NOₓ-Speicherkatalysatoren. Dabei wird NOₓ oberhalb einer Katalysator-Anspring-Temperatur von 150 °C bis 270 °C so lange in den NOₓ-Speicherkatalysatoren durch Chemiesorption eingelagert, bis eine Speicherkapazität oder eine NOₓ-Desorptionstemperatur überschritten wird.

Es ist daher bekannt, die Verbrennungskraftmaschine in Abhängigkeit vorgebbarer Grenzwerte, wie beispielsweise Gehalt des Abgases an NOₓ, CO oder HC stromabwärts des NOₓ-Speicherkatalysators, wieder unter fetter Atmosphäre zu betreiben. Unter diesen Bedingungen wird dann das eingelagerte NOₓ wieder desorbiert und an dem NOₓ-Speicherkatalysator in der Konvertierungsreaktion mit Hilfe der reduzierenden Gaskomponenten umgesetzt (NOₓ-Regeneration).

Es ist femer bekannt, zur Erfassung der Parameter, die einen Wechsel des Arbeitsmodus der Verbrennungskraftmaschine initiieren sollen, unter anderem Gassensoren in dem Abgaskanal anzuordnen. Die Gassensoren können dabei stromab oder stromauf des NOₓ-Speicherkatalysators ein Signal entsprechend einem Gehalt der Gaskomponenten am Abgas zur Verfügung stellen. Derartige Gassensoren können beispielsweise Lambdasonden oder komponentenspezifische Sensoren, wie NOₓ-Sensoren, sein.

In einem dynamischen Betrieb der Verbrennungskraftmaschine kann es zu einer Schädigung des NOₓ-Speicherkatalysators kommen, die zu einer Verschlechterung einer NOₓ-Speicherfähigkeit und/oder einer Deaktivierung des Katalysators führen kann. Die Schädigungen können dabei reversibel oder irreversibel sein. Irreversible Schäden sind beispielsweise alterungsbedingte Schädigungen (thermische Schädigung), wie eine Sinterung einer Katalysatorkomponente, eine Entmischung von Katalysator und Speicherkomponente und eine zunehmend inhomogene oberflächennahe NOₓ-Beladung des NOₓ-Speicherkatalysators. Weiterhin kann es auch zu einem physischen Masseverlust des NOₓ-Speicherkatalysators infolge fortschreitender korrosiver Prozesse kommen.

Daneben treten reversible Schädigungen auf, wie sie beispielsweise durch eine Verschwefelung des NOₓ-Speicherkatalysators entstehen können. Kraftstoffe enthalten in wechselnden Anteilen Schwefel. Während eines Verbrennungsvorgangs, insbesondere in magerer Atmosphäre, entstehen dabei Schwefeloxide SOₓ. Diese werden ebenso wie das NOₓ von dem NOₓ-Speicherkatalysator als Sulfat absorbiert. Eine Sulfatkornbildung innerhalb des NOₓ-Speicherkatalysators kann dann einerseits zu einer Reduzierung der Speicherkapazität führen, und andererseits bilden die Sulfatkörner einen Angriffspunkt für korrosive Prozesse. Es ist daher bekannt, eine SOₓ-Regeneration des NOₓ-Speicherkatalysators in regelmäßigen Zyklen durchzuführen. Da allerdings eine thermodynamische Stabilität des Sulfats wesentlich größer ist als die des während der NOₓ-Absorption gebildeten Nitrats, müssen zur SOₓ-Regeneration deutlich höhere Temperaturen vorliegen. Dies führt allerdings zu einer Beschleunigung der thermischen Schädigungen. Nachteilig bei allen bekannten Verfahren ist es, daß sie nicht eine Unterscheidung zwischen reversiblen und irreversiblen Schädigungen erlauben. Dies wird um so gravierender, wenn die NOₓ-beziehungsweise SOₓ-Regeneration mittels der durch die Gassensoren zur Verfügung gestellten Signale gesteuert werden soll. Liegt in einem solchen Fall eine irreversible Schädigung des NOₓ-Speicherkatalysators vor, so kann dies bei der Steuerung nicht berücksichtigt werden, und infolgedessen kommt es zu erhöhten Schadstoffemissionen und/oder zu einer unnötigen Initiierung der NOₓ- und SOₓ₋Regeneration. Letztendlich muß dann eine arbeits- und kostenintensive Wartung, bei der gegebenenfalls lediglich eine Grenzwertanpassung an einen neuen Katalysatorzustand erfolgt, durchgeführt werden.

Aus der EP 1053777 A1 ist bereits ein Verfahren zur Kontrolle der katalytischen Aktivität eines NOX-Speicherkatalysators bekannt, bei dem mit Hilfe von mindestens einem elektrochemischen Gas-Sensor dessen katalytische Aktivität bestimmt wird, wobei der NOX-Speicherkatalysator bei einem mager eingestellten Verbrennungsgemisch in einer Speicherphase NOX speichert und bei einem fett eingestellten Verbrennungsgemisch in einer Regenerationsphase das gespeicherte NOX umsetzt. Die NOX-Konzentration wird bei diesem Verfahren im Verbrennungsabgas von einem in Strömungsrichtung nach dem NOX-Speicherkatalysator angeordneten NOX-sensitiven Gas-Sensor während der Regenerationsphase ermittelt und als Maß für die katalytische Aktivität des NOX-Speicherkatalysators herangezogen.

Ferner ist aus der EP 0690213 A1 eine Abgasreinigungsvorrichtung bekannt, bei der das Luft-Kraftstoffverhältnis im Abgas, das durch ein Reinigungselement fließt, von einem mageren zu einem fetten Wert für eine vorgegebene Zeit geändert wird und wobei Mittel vorgesehen sind, um den Spitzenwert des Ausgangssignals eines Sauerstoffkonzentrations-Sensors während der Zeit zu ermitteln, in der das Abgas einen fetten Wert aufweist. Aus dem ermittelten Spitzenwert des Ausgangssignals des Sauerstoffkonzentrations-Sensors wird auf den Grad der Schädigung des Abgasreinigungselements geschlossen.

Aufgabe des vorliegenden Verfahrens ist es, die Erfassung der Schädigung eines NOX-Speicherkatalysators zu verbessern, wobei der NOX-Gehalt des Abgases stromabwärts des NOX-Speicherkatalysators ausgewertet wird. Diese Aufgabe wird mit den Merkmalen des unabhängigen Anspruchs gelöst.
In einer bevorzugten Ausgestaltung des Verfahrens wird ein vorgebbarer Schwellenwert entsprechend einer Größe und/oder eines Verlaufs und/oder einer Dauer der Abweichung gebildet. Beim Überschreiten des Schwellenwertes werden dann, je nachdem ob es sich um eine irreversible oder reversible Schädigung handelt, eine Regenerationsmaßnahme initiiert und/oder ein Wartungssignal erzeugt.

In einer weiteren Ausgestaltung des Verfahrens wird entsprechend einer vorliegenden irreversiblen Schädigung anhand des Schwellenwertes ein Korrekturwert für die Grenzwerte des NOₓ-Speicherkatalysators gebildet. Auf diese Weise können beispielsweise die Regenerationsmaßnahmen dem neuen Katalysatorzustand angepaßt werden.

Des weiteren kann erst beim Überschreiten des Korrekturwertes über einen vorgebbaren Toleranzwert das Wartungssignal erzeugt werden. Die Wartung braucht dann nur noch beim Vorliegen einer entsprechend hohen irreversiblen Schädigung des NOₓ-Speicherkatalysators durchgeführt zu werden.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine Anordnung eines Katalysatorsystems in einem Abgaskanal einer Verbrennungskraftmaschine;
- Figur 2: einen Verlauf eines Meßsignals an einem NOₓ-Sensor stromab eines NOₓ-Speicherkatalysators;
- Figuren 3 und 4: einen Verlauf eines Meßsignals eines NOₓ-Sensors stromab eines NOₓ-Speicherkatalysators unter Berücksichtigung einer NH₃-Querempfindlichkeit;
- Figur 5: einen Verlauf von Lambda stromab und stromauf eines NOₓ₋Speicherkatalysators während eines Wechsels eines Arbeitsmodus einer Verbrennungskraftmaschine und
- Figuren 6 bis 11: einen Einfluß ausgewählter Schädigungsmuster während einer vorgebbaren Zeitspanne auf einen Verlauf von Lambda stromab eines NOₓ-Speicherkatalysators.

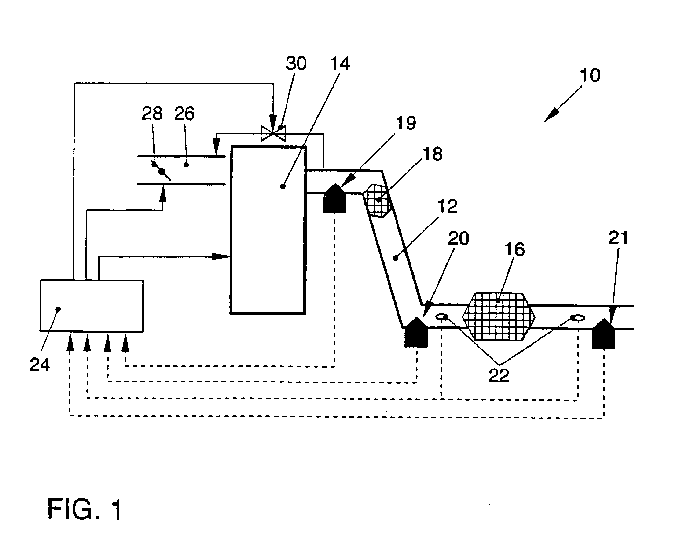

In der Figur 1 ist in schematischer Weise eine Anordnung eines Katalysatorsystems 10 in einem Abgaskanal 12 einer Verbrennungskraftmaschine 14 dargestellt. Das Katalysatorsystem 10 umfaßt einen NOₓ-Speicherkatalysator 16 und einen Vorkatalysator 18 sowie diverse Temperatursensoren 22. Weiterhin befinden sich Gassensoren 19, 20, 21 in dem Abgaskanal 12, die zur Erfassung wenigstens einer Gaskomponente eines Abgases der Verbrennungskraftmaschine dienen und ein Signal entsprechend eines Gehalts der Gaskomponente am Abgas bereitstellen. Solche Gassensoren 19, 20, 21 sind bekannt und können beispielsweise NOₓ-Sensoren oder Lambdasonden sein.

Ein Arbeitsmodus der Verbrennungskraftmaschine 14 kann mittels eines Motorsteuergerätes 24 geregelt werden. Wird beispielsweise ein Arbeitsmodus mit λ, < 1 (fette Atmosphäre) gewünscht, so muß eine Sauerstoffkonzentration in einem Saugrohr 26 vor einer Verbrennung eines Kraftstoff-Luft-Gemisches gesenkt werden. Damit erhöhen sich der Gehalt reduzierender Gaskomponenten im Abgas im Vergleich zu einem Gehalt an Sauerstoff. Beispielsweise kann ein solcher Arbeitsmodus durch eine Reduzierung eines Volumenstroms angesaugter Luft mittels einer Drosselklappe 28 und durch gleichzeitige Zuführung sauerstoffarmen Abgases über ein Abgasrückflußventil 30 erfolgen.

In einem Arbeitsmodus mit λ > 1 (magere Atmosphäre) wird neben NOₓ auch SOₓ im NOₓ-Speicherkatalysator 16 absorbiert, während die geringen Anteile reduzierender Gaskomponenten fast vollständig im Vorkatalysator 18 umgesetzt werden. In Abhängigkeit von einer Kapazität und einer Desorptionstemperatur des NOₓ-Speicherkatalysators 16 muß die Verbrennungskraftmaschine 14 zur Regeneration mit λ ≤ 1 betrieben werden (NOₓ-Regeneration). In einem solchen Arbeitsmodus wird das zuvor absorbierte NOₓ an einer katalytisch aktiven Oberfläche des NOₓ-Speicherkatalysators 16 durch die reduzierenden Gaskomponenten abgebaut (Konvertierungsreaktion).

Ebenfalls absorbiertes SOₓ wird in Form von Sulfat in dem NOₓ-Speicherkatalysator 16 eingelagert, wobei allerdings eine Reversibilität dieses Einlagerungsprozesses im Gegensatz zu der Einlagerung von NOₓ wesentlich höhere Temperaturen erfordert. Somit muß zur Entschwefelung eine Mindestentschwefelungstemperatur und ein Lambdawert ≤ 1 vorliegen (SOₓ-Regeneration).

Eine Entschwefelungsnotwendigkeit ergibt sich aus einer Effizienz des NOₓ-Speicherkatalysators 16 für die Konvertierungsreaktion von NOₓ. Die Erfassung der Effizienz kann mit Hilfe des Gassensors 21 erfolgen, der beispielsweise eine NOₓ-Konzentration hinter dem NOₓ-Speicherkatalysator 16 mißt. Aufgrund von Erfahrungswerten oder über eine Messung der NOₓ-Konzentration vor dem NOₓ-Speicherkatalysator 16 - beispielsweise mit zumindest einem der Gassensoren 19, 20 - kann ein Verschwefelungsgrad und damit die Effizienz bestimmt werden. Über die Temperatursensoren 22 läßt sich eine aktuelle Temperatur (Katalysatortemperatur) am NOₓ-Speicherkatalysator 16 erfassen, während der aktuelle Lambdawert vor dem NOₓ-Speicherkatalysator 16 wiederum über die Gassensoren 19, 20 bestimmbar ist, sofern diese Lambdasonden sind.

Neben der vorab dargestellten Verschwefelung stellt auch eine Belegung des NOₓ-Speicherkatalysators 16 mit Kondensat oder Ruß eine reversible Schädigung des NOₓ-Speicherkatalysators 16 dar. Daneben können aber auch irreversible Schädigungen auftreten. Solche irreversiblen Schädigungen infolge von Alterungserscheinungen und/oder thermischer Schädigungen können sowohl eine Speicherkomponente als auch eine Katalysatorkomponente des NOₓ-Speicherkatalysators 16 betreffen. So führen beispielsweise eine Entmischung oder Phasenumwandlungen der Katalysator- und Speicherkomponenten, eine Sinterung der Katalysatorkomponente oder eine zunehmend inhomogene oberflächennahe NOₓ-Beladung des NOₓ-Speicherkatalysators 16 zu einer erhöhten NOₓ-Emission. Daneben kann durch fortschreitende korrosive Prozesse ein physischer Massenverlust auftreten. Insgesamt ist damit sowohl eine NOₓ-Speicherfähigkeit als auch eine katalytische Aktivität gemindert.

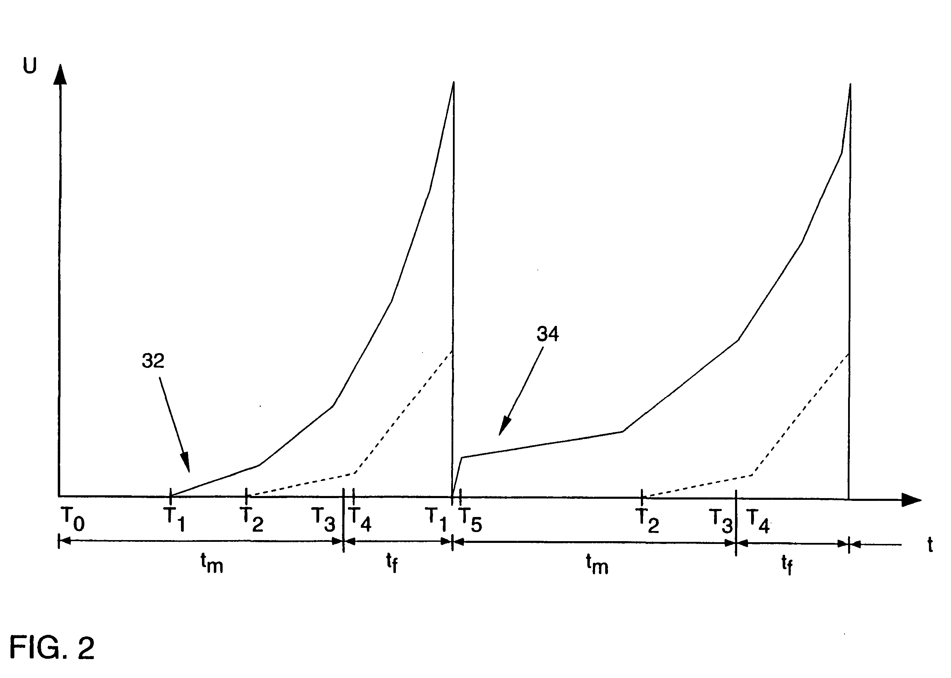

Ist der Gassensor 21 stromab des NOₓ-Speicherkatalysators 16 ein NOₓ-Sensor, so kann bei Vorliegen einer Schädigung ein Signalverlauf, wie in Figur 2 dargestellt, verfolgt werden. Dabei sind zwei beispielhafte Signalverläufe, bei denen ein unterschiedliches Schädigungsmuster vorliegt, nebeneinander dargestellt. Ein Sollverlauf für das von dem NOₓ-Sensor zu erfassende Meßsignal (gestrichelte Linie) kann dabei direkt mit dem Signalverlauf (durchgezogene Linie) verglichen werden. Der Sollverlauf kann in bekannter Weise aus einem Modell für den NOₓ-Speicherkatalysator 16 und gemessenen oder berechneten Rohemissionen der Verbrennungskraftmaschine 14 berechnet werden.

Zunächst wird in einer Phase tₘ der NOₓ-Speicherkatalysator 16 mit einer mageren Atmosphäre (λ > 1) beaufschlagt. Ab einem Zeitpunkt T₃ wechselt der Arbeitsmodus der Verbrennungskraftmaschine 14, und der NOₓ-Speicherkatalysator 16 wird für eine Phase t_{f} zur NOₓ-Regeneration mit einer fetten Atmosphäre beaufschlagt. Die Mittel zur zumindest temporären Beeinflussungen von wenigstens einem Betriebsparameter der Verbrennungskraftmaschine 14 während des Wechsels des Arbeitsmodus sind bekannt und sollen hier nicht näher erläutert werden. Ebenso ist bekannt, die Regeneration des NOₓ-Speicherkatatysators über geeignete Betriebsparameter des NOₓ-Speicherkatalysators 16 zu steuern. So kann beispielsweise der Wechsel des Arbeitsmodus anhand eines applizierbaren Grenzwertes für die NOₓ-Konzentration nach dem NOx-Speicherkatalysator 16 initiiert werden.

Der Sollverlauf zeigt nach dem Wechsel des Arbeitsmodus einen deutlichen Anstieg der NOₓ-Emission, da unter den nun vorliegenden Bedingungen eine Desorption von NOₓ stattfindet, und es nicht möglich ist, eine gesamte NOₓ-Masse an den Katalysatorkomponenten umzusetzen. Eine kurzfristige Verzögerung des Anstieges der NOₓ-Emission kurz nach dem Wechsel des Arbeitsmodus (bis zum Zeitpunkt T₄) basiert dabei auf einem Totvolumen des NOₓ-Speicherkatalysators 16.

Der Signalverlauf auf der linken und der rechten Seite zeigt jeweils eine signifikante Abweichung von dem Sollverlauf. So beginnt bei einem Schädigungsmuster 32 die Sättigung des NOₓ-Speicherkatalysators 16 wesentlich früher (Zeitpunkt T₁) als bei dem Sollverlauf (Zeitpunkt T₂). Hieraus läßt sich auf Schädigungen infolge thermischer Alterung schließen. Das Schädigungsmuster 34 dagegen zeigt bereits kurz nach der NOₓ-Regeneration bis zu einem Zeitpunkt T₅ einen sehr starken Anstieg der NOₓ-Emission, was auf eine Schwefelvergiftung und damit eine reversible Schädigung des NOₓ-Speicherkatalysators 16 hindeutet.

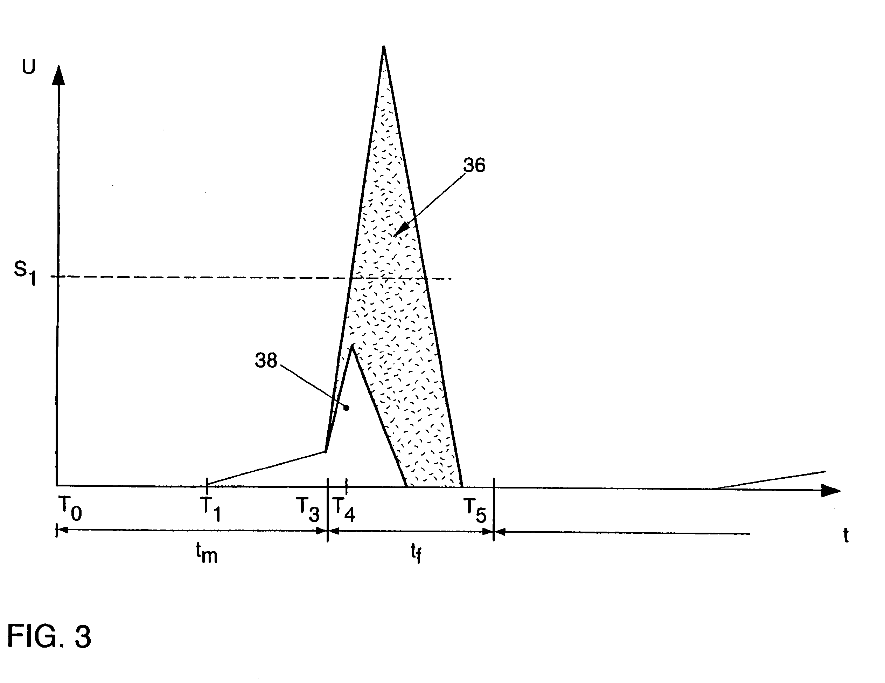

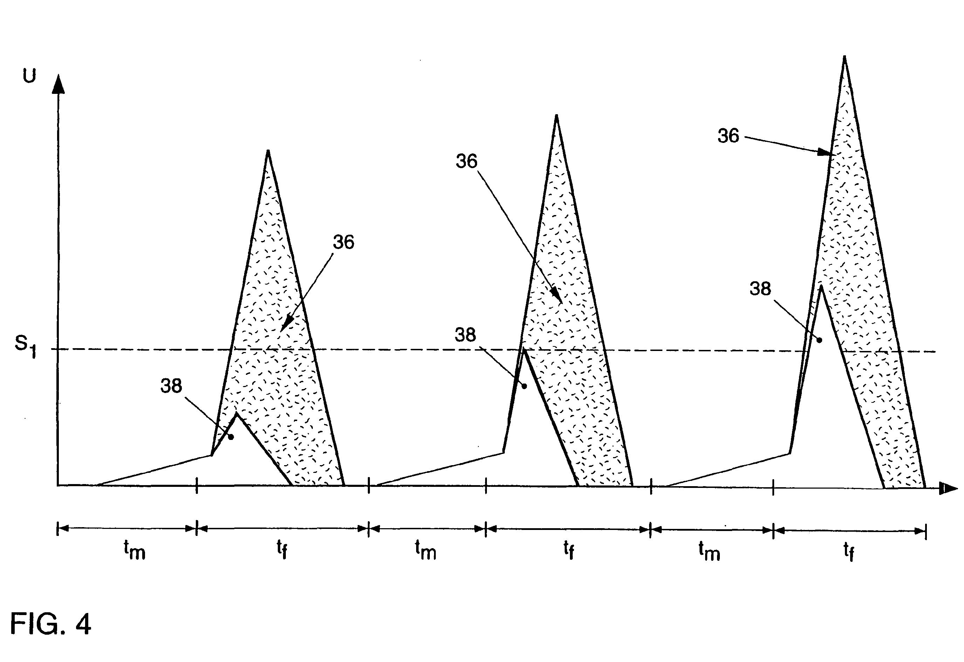

Ein sehr stark ansteigender Signalverlauf während der Phase t_{f} basiert allerdings nicht nur auf einer Schädigung des NOₓ-Speicherkatalysators 16, sondern ist auch aufgrund einer hohen Querempfindlichkeit der NOₓ-Sensoren zu Ammoniak NH₃ gegeben. Eine NH₃-Emission kann in Abhängigkeit von den Betriebsparametern der Verbrennungskraftmaschine 14 und des NOₓ-Speicherkatalysators 16 berechnet werden und aus einem Meßsignal 36 herausgerechnet werden. Ein resultierendes Signal 38 ist in Figur 3 dargestellt und erlaubt eine Prognose einer tatsächlichen NOₓ₋Emission in der fetten Phase t_{f}. Auf diese Weise lassen sich Schädigungen ermitteln, die zu einer Deaktivierung der Katalysatorkomponenten führen, ohne daß gleichzeitig eine Schädigung der Speicherkomponenten vorliegt. Ein für einen Vergleich herangezogener Schwellenwert S₁ muß wegen der zu erwartenden Ungenauigkeiten bei der Berechnung der NH₃-Emission nicht notwendigerweise an den tatsächlichen NOₓ-Emissionen orientiert sein, sondern resultiert aus den Änderungen des Sensorsignales bei der Regeneration eines definiert gealterten NOₓ-Speicherkatatysators 16 im Vergleich zu einem frischen NOₓ-Speicherkatalysator 16, wobei in beiden Fällen die NH₃-Emission nach dem gleichen Verfahren herausgerechnet wird (Figur 4). Wird der Schwellenwert S₁ überschritten, so kann ein Wartungssignal erzeugt werden.

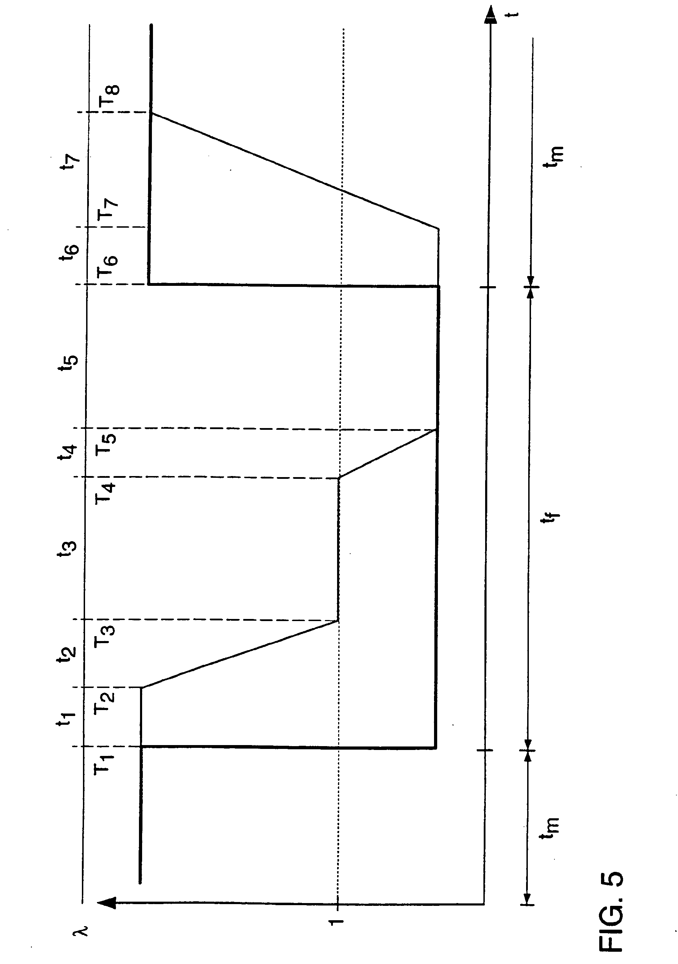

Die Figur 5 zeigt einen Verlauf der Lambdawerte stromauf (fette Linie) und stromab (dünne Linie) des NOₓ-Speicherkatalysators 16. Dazu muß das selbstverständlich der Gassensor 21 sowie zumindest die Gassensoren 19 und/oder 20 einer Lambdasonde sein. Zunächst wird für die Phase tₘ bis zu einem Zeitpunkt T₁ der NOₓ-Speicherkatalysator 16 mit einem mageren Abgas beaufschlagt, und ab dem Zeitpunkt T₁ wird für die Phase t_{f} bis zu einem Zeitpunkt T₆ ein fetter Arbeitsmodus der Verbrennungskraftmaschine 14 eingestellt. Die Lage des Lambdawertes während der Phasen tₘ und t_{f} ist selbstverständlich frei applizierbar.

Stromab des NOₓ-Speicherkatalysators 16 verharrt der Lambdawert in einer Phase t₁ noch eine Zeit lang im Bereich des Lambdawertes des mageren Arbeitsmodus der Verbrennungskraftmaschine 14. Eine Dauer der Phase t₁ ist abhängig von einem Katalysatorvolumen, einer Sauerstoffspeicherfähigkeit, einer Größe des Lambdawertes vor dem NOₓ-Speicherkatalysator 16 und einer Raumgeschwindigkeit. Anschließend fällt der Lambdawert in einer Phase t₂ auf λ = 1 zurück und verharrt auf diesem Wert solange die NOₓ-Desorption stattfindet. Ab einem Zeitpunkt T₄ fällt der Lambdawert in einer Phase t₄ auf den Lambdawert, der vor dem NOₓ-Speicherkatalysator 16 herrscht und verharrt dort in einer Phase t₅, sofern nicht sinnvollerweise die Regeneration bereits zu Beginn der Phase t₄ abgebrochen wird. Wird schließlich der NOₓ-Speicherkatalysator 16 wieder mit einem mageren Abgas beaufschlagt, so ist nach einer gewissen Verzögerung (Phase t₆) ein Anstieg des Lambdawertes ab einem Zeitpunkt T₇ über eine Phase t₇ zu beobachten. Ab einem Zeitpunkt T₈ ist dann wieder der Lambdawert des mageren Abgases vor dem NOₓ-Speicherkatalysator 16 gegeben.

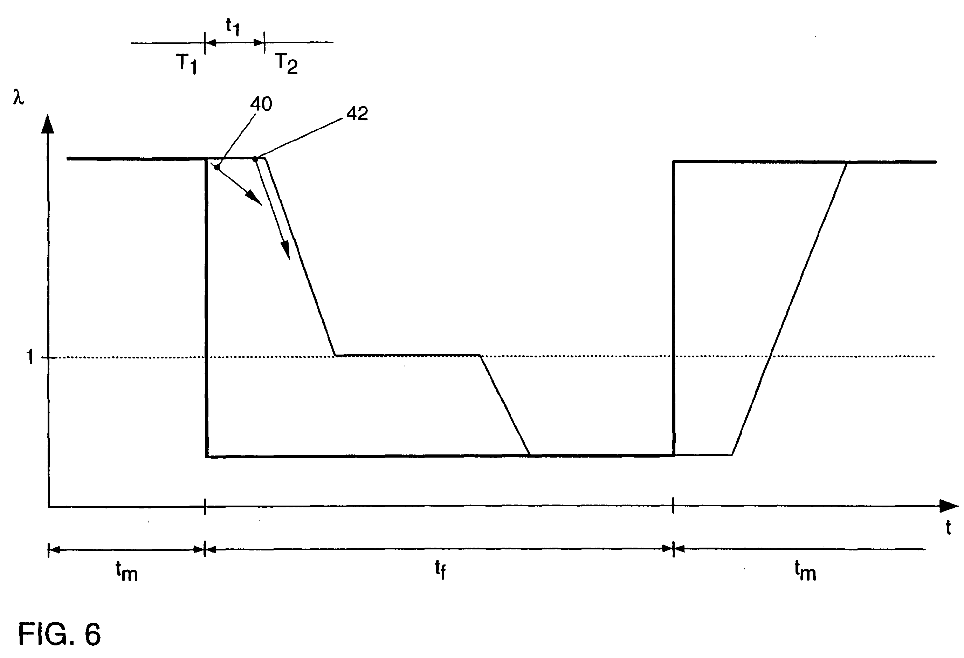

Eine Abweichung von dem Verlauf des Signales hinter dem NOₓ-Speicherkatalysator 16 erlaubt eine Detektion verschiedener Schädigungsmuster. In den Figuren 6 bis 11 sind jeweils tendenzielle Verläufe in Form von Pfeilen für eine bestimmte Phase des Signalverlaufes eingetragen.

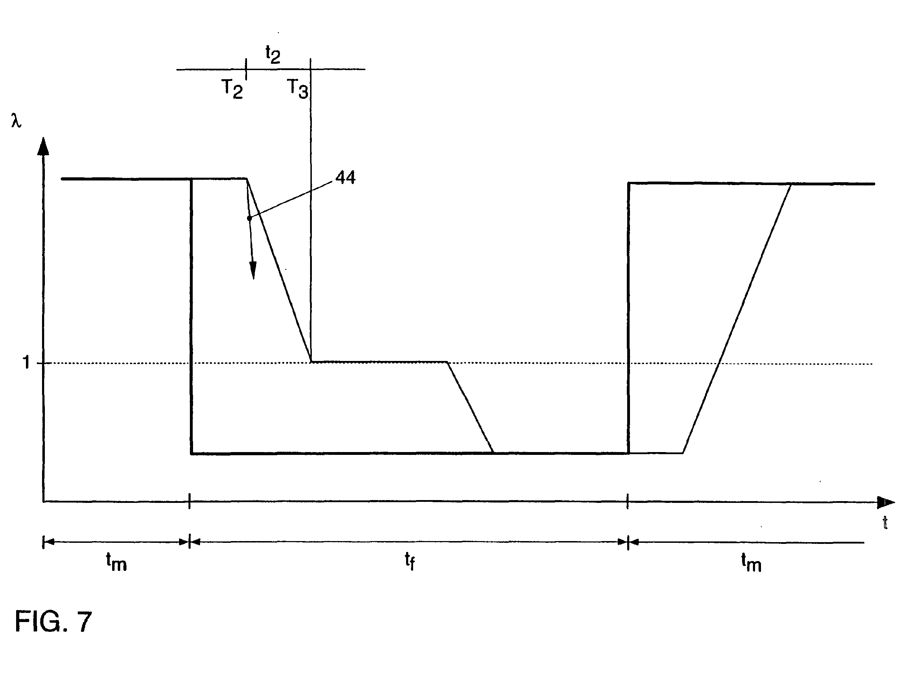

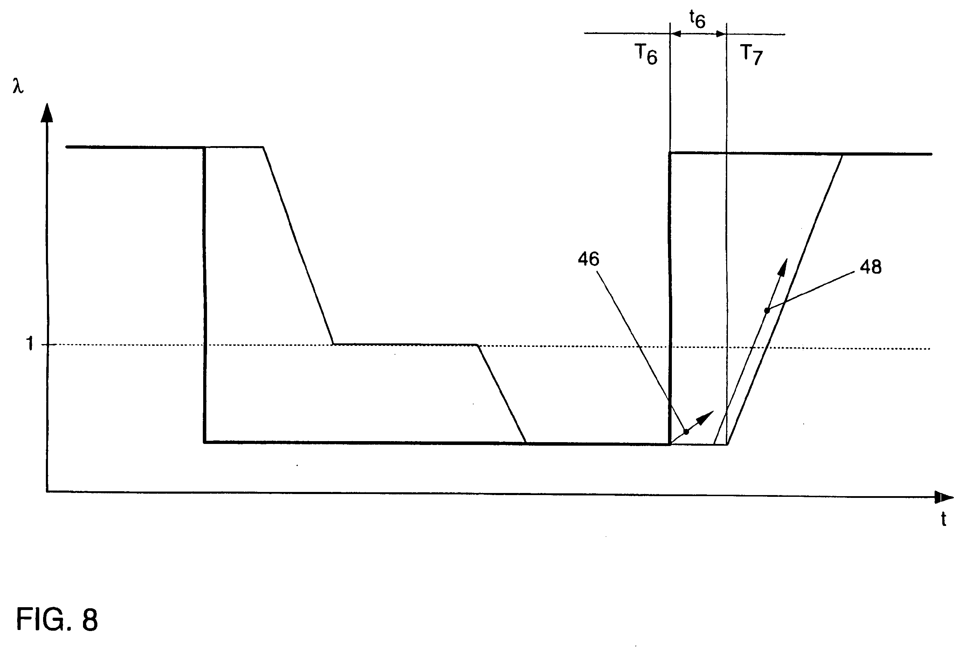

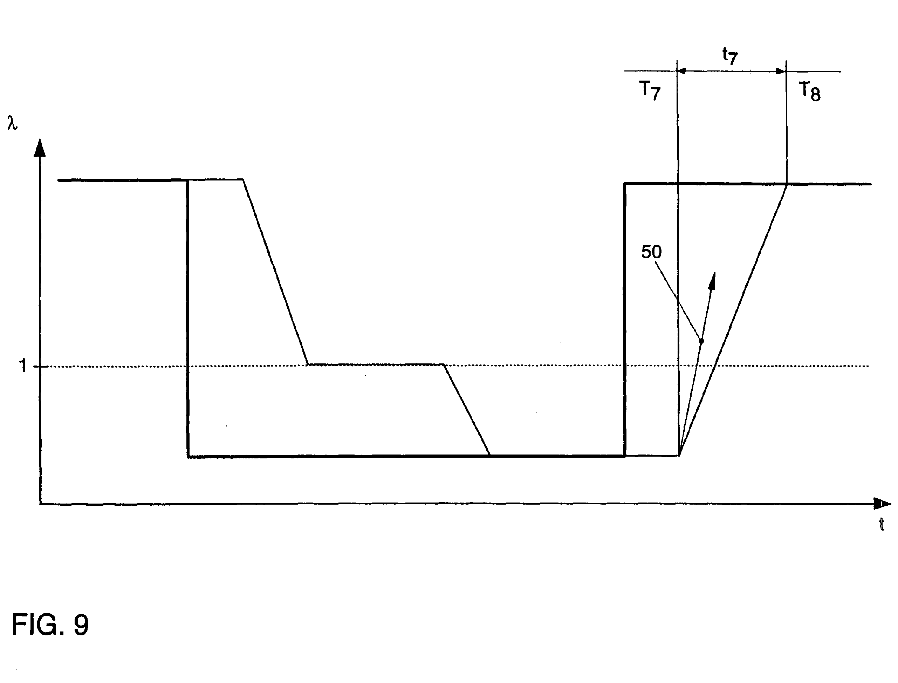

So zeigt ein vorzeitiger Abfall 40 oder eine verkürzte Dauer 42 der Phase t₁ eine Abnahme der Sauerstoffspeicherfähigkeit an, was Rückschlüsse über eine Abnahme einer absoluten NOₓ-Speicherfähigkeit erlaubt (Figur 6). In gleicher Weise läßt sich die Abweichung 44 der Phase t₂, bei der das Lambdasignal steiler abfällt, interpretieren (Figur 7). Ebenso sind die Abweichungen 46, 48 in der Phase t₆ (Figur 8) und die Abweichung 50 in der Phase t₇ (Figur 9) auf die reduzierte Sauerstoffspeicherfähigkeit zurückzuführen. So kann es zu einem vorzeitigen Anstieg (Abweichung 46) oder zu einer verkürzten Dauer der Phase t₆ (Abweichung 48) oder zu einem wesentlich steileren Anstieg der Phase t₇ (Abweichung 50) kommen.

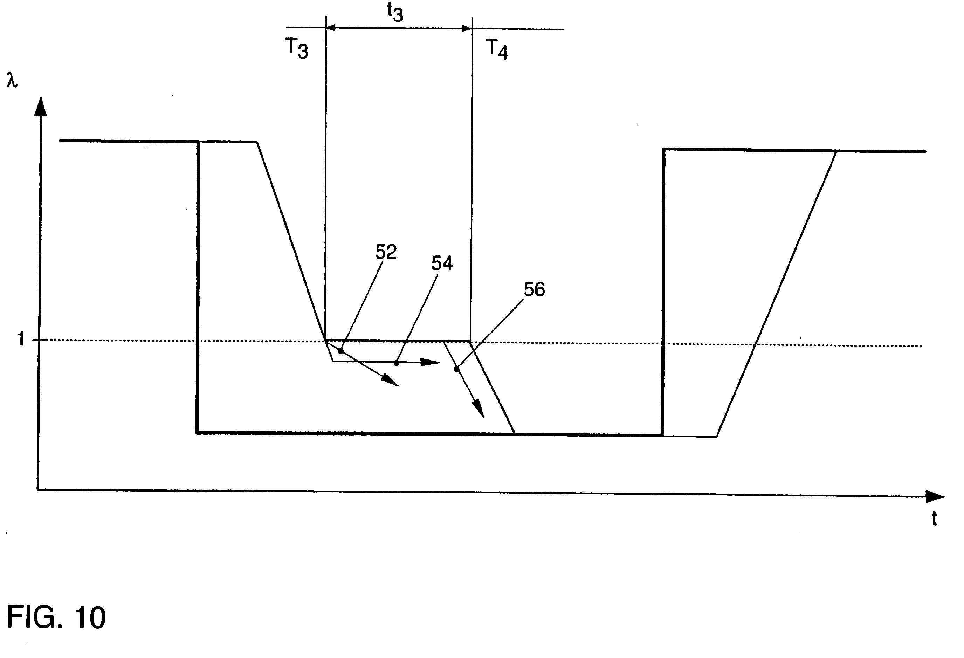

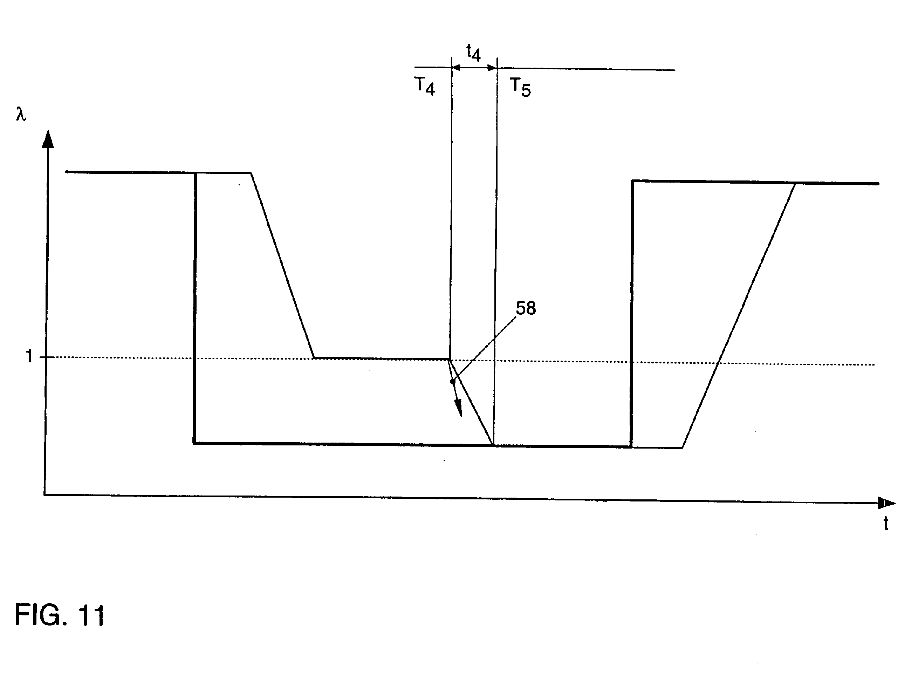

In der Figur 10 sind die Abweichungen 52, 54, 56 für den Signalverlauf in der Phase t₃ eingetragen. Die Abweichung 52, bei der es zu einem Abfall des Lambdawertes während der NOₓ-Regeneration kommt, kann dabei auf einer Abnahme der absoluten NOₓ-Speicherfähigkeit beruhen. Diese kann einerseits durch thermische Schädigungen und andererseits durch Verschwefelung gegeben sein. Weiterhin ist auch eine Abnahme der NOₓ-Speicherfähigkeit aufgrund einer Sinterung der Speicherkomponente, der Entmischung der Speicher- und Katalysatorkomponente oder einer Zunahme einer Diffusionshemmung aufgrund zunehmend inhomogener oberflächennaher NOₓ-Beladung denkbar. In gleicher Weise ist die Abweichung 54 von dem ldealsignal bei λ = 1 interpretierbar. Ein vorzeitiger Übergang zur Phase t₄ (Abweichung 56) beruht auf einer Abnahme der absoluten NOₓ-Speicherfähigkeit durch thermische Schädigung, Verschwefelung aber auch durch einen physischen Massenverlust. Letzterer ist auch an einer Steilheit des Abfalles des Lambdasignales ab dem Zeitpunkt T₄ in der Phase t₄ ablesbar (Figur 11 und Abweichung 58). Die Abweichung 58 kann daneben auf einer thermischen Schädigung und einer Schädigung durch Sinterung basieren.

Insgesamt kann somit ein Verlauf und/oder eine Dauer und/oder eine Größe der Abweichungen des Signalverlaufes von dem Sollverlauf in beliebig vorgebbaren Zeitspannen erfaßt werden. Die einzelnen Zeitspannen können sich über mehrere Phasen, aber auch lediglich über einzelne Bereiche einer Phasen erstrecken. Ihre Auswahl kann den jeweiligen Erfordernissen angepaßt werden. Die Abweichungen in wenigstens einer vorgebbaren Zeitspanne können zu einem Fehlerwert zusammengefaßt werden. Beim Überschreiten des Fehlerwertes über einen vorgebbaren Schwellenwert kann dann ein Wartungssignal erzeugt werden.

Denkbar ist aber auch, daß beim Überschreiten des Schwellenwertes zunächst wenigstens eine Regenerationsmaßnahme initiiert wird - entsprechend dem vorliegenden Schädigungsmuster. Als Regenerationsmaßnahme kann beispielsweise eine vorzeitige Entschwefelung oder eine vorzeitige NOₓ-Regeneration eingeleitet werden. Die Regenerationsmaßnahmen werden solange innerhalb eines applizierbaren Zeitraumes wiederholt, bis der Schwellenwert wieder unterschritten wird.

Ist der Schwellenwert nach Beendigung der Regenerationsmaßnahmen noch nicht unterschritten, so wird wiederum ein Wartungssignal erzeugt. Wird der Schwellenwert unterschritten, liegen aber weiterhin Abweichungen vor, so ist es sinnvoll, die Regenerationsmaßnahmen erneut zu wiederholen. Liegen anschließend weitestgehend gleichartige Abweichungen vor, so kann wiederum in Abhängigkeit von dem Verlauf und/oder der Größe und/oder der Dauer der Abweichung ein Korrekturwert gebildet werden.

Mit Hilfe des Korrekturwertes können dann ein geänderter Sollverlauf berechnet, als auch die Betriebsparameter des NOₓ-Speicherkatalysators 16 neu festgelegt werden. So kann beispielsweise eine Dauer der Regenerationsmaßnahmen, ein Verlauf und eine Lage des Lambdawertes während der Regenerationsmaßnahmen oder ein Grenzwert für die Verschwefelung beziehungsweise eine NOₓ-Beladung geändert werden.

Selbstverständlich kann beim Überschreiten des Korrekturwertes über einen applizierbaren Toleranzwert wiederum ein Wartungssignal erzeugt werden.

## Patentansprüche

1. Verfahren zur Erfassung der Schädigung von wenigstens einem in einem Abgaskanal einer Verbrennungskraftmaschine angeordneten NOX-Speicherkatalysator, wobei durch einen stromabwärts des NOX-Speicherkatalysators angeordneten NOX-Sensor der NOX-Gehalt des Abgases erfasst und ein entsprechendes Signal bereitgestellt wird und der Signalverlauf des NOX-Sensors während und nach dem Wechsel eines Arbeitsmodus der Verbrennungskraftmaschine erfasst und in einer vorgegebenen Zeitspanne mit einem vorgegebenem Soll-Verlauf verglichen wird, **dadurch gekennzeichnet, dass** zur Unterscheidung zwischen einer thermischen Schädigung und einer Schwefelvergiftung ein unterschiedlich starker Anstieg der Werte des Signals des NOX-Sensors im mageren Arbeitsmodus nach einer Regeneration des NOx-Speicherkatalysators in einer vorgegebenen Zeitspanne vor dem Wechsel von einem mageren zu einem fetten Arbeitsmodus herangezogen wird.

2. Verfahren nach Anspruch 1, **dadurch gekennzeichnet dass** der Einfluss einer NH3-Emission auf das Signal des NOX-Sensors in Abhängigkeit von den Betriebsparametern der Verbrennungskraftmaschine und des NOX-Speicherkatalysators errechnet und das Signal entsprechend korrigiert wird.

3. Verfahren nach Anspruch 1 oder 2, **dadurch gekennzeichnet, dass** durch eine stromabwärts des NOX-Speicherkatalysators angeordnete Lambdasonde ein dem Lambdawert des Abgases entsprechendes Signal gebildet und der Signalverlauf der Lambdasonde zumindest während einer NOx-Regeneration des NOx-Speicherkatalysators erfasst wird, und das aus einer Abweichung des Signalverlaufs der Lambdasonde von einem λ = 1 Wert während der NOx-Regeneration Rückschlüsse auf die absolute NOₓ-Speicherfähigkeit des NOₓ-Speicherkatalysators gezogen werden.

4. Verfahren nach zumindest einem der vorhergehenden Ansprüche, **dadurch gekennzeichnet, dass** der Einfluss der NH3-Emission aus dem Vergleich der Änderungen des Signals des NOX-Sensors (21) bei der Regeneration eines definiert gealterten NOX-Speicherkatalysators (16) mit einem frischen NOX-Speicherkatalysator (16) ermittelt wird.

5. Verfahren nach zumindest einem der vorhergehenden Ansprüche, **dadurch gekennzeichnet, dass** ein Verlauf und/oder eine Dauer und/oder eine Größe einer Abweichung des Signalverlaufes von dem Sollverlauf zu einem Fehlerwert zusammengefasst wird.

6. Verfahren zumindest einem der vorhergehenden Ansprüche, **dadurch gekennzeichnet, dass** beim Überschreiten des Fehlerwertes über einen vorgebbaren Schwellenwert wenigstens eine Regenerationsmaßnahme initiiert wird.

7. Verfahren nach zumindest einem der vorhergehenden Ansprüche, **dadurch gekennzeichnet, dass** als Regenerationsmaßnahme eine vorzeitige Entschwefelung oder eine vorzeitige NOx-Regeneration initiiert wird.

8. Verfahren nach Anspruch 7, **dadurch gekennzeichnet, dass** die Regenerationsmaßnahme solange innerhalb eines applizierbaren Zeitraumes wiederholt wird, bis der Schwellenwert unterschritten wird.

9. Verfahren nach Anspruch 6 oder 8, **dadurch gekennzeichnet, dass** bei einer weitestgehend gleichartigen Abweichung vor und nach der wenigstens einen Regenerationsmaßnahme in Abhängigkeit von dem Verlauf und/oder der Größe und/oder der Dauer der Abweichung ein Korrekturwert gebildet wird.

10. Verfahren nach Anspruch 9, **dadurch gekennzeichnet, dass** der Sollverlauf unter Berücksichtigung des Korrekturwertes neu berechnet wird.

11. Verfahren nach Anspruch 9, **dadurch gekennzeichnet, dass** in Abhängigkeit von dem Korrekturwert wenigstens ein Betriebsparameter des NOx-Speicherkatalysators geändert wird.

12. Verfahren nach Anspruch 11, **dadurch gekennzeichnet, dass** als Betriebsparameter die Dauer der Regenerationsmaßnahmen und/oder ein Verlauf und ein Lage des Lambdawertes während der Regenerationsmaßnahmen und/oder ein Grenzwert für eine Verschwefelung und/oder eine NOx-Beladung neu festgelegt werden.

13. Verfahren nach zumindest einem der vorhergehenden Ansprüche, **dadurch gekennzeichnet, dass** beim Überschreiten des Fehlerwertes über den Schwellenwert ein Wartungssignal erzeugt wird.

14. Verfahren nach zumindest einem der vorhergehenden Ansprüche, **dadurch gekennzeichnet, dass** beim Überschreiten des Korrekturwertes über einen vorgebbaren Toleranzwert ein Wartungssignal erzeugt wird.

## Claims

1. Method for detecting deterioration of at least one NOx storage-type catalytic converter arranged in an exhaust line of an internal combustion engine, the NOx content of the exhaust gas being determined by an NOx sensor arranged downstream of the NOx storage-type catalytic converter, and a corresponding signal being made available, and the signal profile of the NOx sensor being determined during and after the changeover of a working mode of the internal combustion engine and being compared with a predefined setpoint profile in a predefined time period, **characterized in that** a different degree of rise in the values of the signal of the NOx sensor in the lean operating mode after regeneration of the NOx storage-type catalytic converter in a predefined time period before the changeover from a lean operating mode to a rich operating mode is used to differentiate between thermal deterioration and sulphur poisoning.

2. Method according to Claim 1, **characterized in that** the influence of a NH3 emission on the signal of the NOx sensor is calculated as a function of the operating parameters of the internal combustion engine and of the NOx storage-type catalytic converter, and the signal is correspondingly corrected.

3. Method according to Claim 1 or 2, **characterized in that** a lambda probe arranged downstream of the NOx storage-type catalytic converter forms a signal which corresponds to the lambda value of the exhaust gas and the signal profile of the lambda probe is determined at least during an NOx regeneration of the NOx storage-type catalytic converter, and **in that** conclusions about the absolute NOx storage capability of the NOx storage-type catalytic converter are drawn from a deviation of the signal profile of the lambda probe from a λ = 1 value during the NOx regeneration.

4. Method according to at least one of the preceding claims, **characterized in that** the influence of the NH3 emission is determined from the comparison of the changes of the signal of the NOx sensor (21) during the regeneration of an NOx storage-type catalytic converter (16), which has aged in a defined fashion, with a fresh NOx storage-type catalytic converter (16).

5. Method according to at least one of the preceding claims, **characterized in that** a profile and/or a duration and/or a value of a deviation of the signal profile from the setpoint profile are combined to form a fault value.

6. Method according to at least one of the preceding claims, **characterized in that** at least one regeneration measure is initiated when the fault value exceeds a predefinable threshold value.

7. Method according to at least one of the preceding claims, **characterized in that** premature desulphurization or premature NOx regeneration is initiated as a regeneration measure.

8. Method according to Claim 7, **characterized in that** the regeneration measure is repeated within an applicable time period until the value drops below the threshold value.

9. Method according to Claim 6 or 8, **characterized in that**, when there is a very largely identical deviation before and after the at least one regeneration measure, a correction value is formed as a function of the profile and/or the value and/or the duration of the deviation.

10. Method according to Claim 9, **characterized in that** the setpoint profile is newly calculated taking into account the correction value.

11. Method according to Claim 9, **characterized in that** at least one operating parameter of the NOx storage-type catalytic converter is changed as a function of the correction value.

12. Method according to Claim 11, **characterized in that** the duration of the regeneration measures and/or a profile and a position of the lambda value during the regeneration measures and/or a limiting value for sulphurization and/or an NOx charge are newly determined as operating parameters.

13. Method according to at least one of the preceding claims, **characterized in that** a maintenance signal is generated when the fault value exceeds the threshold value.

14. Method according to at least one of the preceding claims, **characterized in that** a maintenance signal is generated when the correction value exceeds a predefinable tolerance value.

## Revendications

1. Procédé en vue de l'évaluation de la détérioration d'au moins un catalyseur accumulateur de NOₓ, disposé dans un canal d'échappement d'un moteur à combustion interne, la teneur en NOₓ du gaz d'échappement étant déterminée par un capteur de NOₓ disposé en aval du catalyseur accumulateur de NOₓ et un signal correspondant étant mis à disposition et le déroulement du signal du capteur de NOₓ étant déterminé pendant et après le changement d'un mode de travail du moteur à combustion interne et étant comparé dans un intervalle de temps prédéterminé avec un déroulement de consigne prédéterminé, **caractérisé en ce que**, en vue de la différentiation entre une détérioration thermique et un empoisonnement au soufre, l'on fait appel à une augmentation d'une ampleur différente des valeurs du signal du capteur de NOₓ dans le mode de fonctionnement en régime maigre après une régénération du catalyseur accumulateur de NOₓ dans un intervalle de temps prédéterminé avant le changement d'un mode de travail en régime maigre à un mode de travail en régime riche.

2. Procédé selon la revendication 1, **caractérisé en ce que** l'influence d'une émission de NH₃ sur le signal du capteur de NOₓ est calculée en fonction des paramètres de fonctionnement du moteur à combustion interne et du catalyseur accumulateur de NOₓ et **en ce que** le signal est corrigé en conséquence.

3. Procédé selon la revendication 1 ou 2, **caractérisé en ce que**, grâce à une sonde lambda disposée en aval du catalyseur accumulateur de NOₓ, un signal correspondant à la valeur lambda du gaz d'échappement est formé et **en ce que** le déroulement du signal de la sonde lambda est déterminé tout au moins pendant une régénération de NOₓ du catalyseur accumulateur de NOₓ, et **en ce que**, en partant d'une déviation du déroulement du signal de la sonde lambda d'une valeur λ = 1 pendant la régénération de NOₓ, on tire des conclusions relatives à la capacité absolue d'accumulation des NOₓ du catalyseur accumulateur de NOₓ.

4. Procédé selon l'une quelconque des revendications précédentes, **caractérisé en ce que** l'influence de l'émission de NH₃ est déterminée à partir de la comparaison des modifications du signal du capteur de NOₓ (21) lors de la régénération d'un catalyseur accumulateur de NOₓ (16), vieilli d'une manière définie, avec un catalyseur accumulateur de NOₓ (16) frais.

5. Procédé selon l'une quelconque des revendications précédentes, **caractérisé en ce qu'**un déroulement et/ou une durée et/ou un grandeur d'une déviation du déroulement du signal par rapport au déroulement de consigne est consolidé sous la forme d'une valeur d'erreur.

6. Procédé selon l'une quelconque des revendications précédentes, **caractérisé en ce que**, lors du dépassement de la valeur d'erreur au-delà d'une valeur-seuil prédéterminable, on amorce au moins une mesure de régénération.

7. Procédé selon l'une quelconque des revendications, **caractérisé en ce qu'**en tant que mesure de régénération, on amorce une désulfuration précoce ou une régénération précoce des NOₓ.

8. Procédé selon la revendication 7, **caractérisé en ce que** la mesure de régénération est répétée au sein d'un intervalle de temps applicable, tant que la valeur-seuil n'a pas été atteinte.

9. Procédé selon la revendication 6 ou 8, **caractérisé en ce que**, lors d'une déviation essentiellement similaire avant et après au moins une mesure de régénération, on forme, en fonction du déroulement et/ou de la grandeur et/ou de la durée de la déviation, une valeur de correction.

10. Procédé selon la revendication 9, **caractérisé en ce que** le déroulement de consigne est calculé à nouveau en tenant compte de la valeur de correction.

11. Procédé selon la revendication 9, **caractérisé en ce que** l'on modifie, en fonction de la valeur de correction, au moins un paramètre de fonctionnement du catalyseur accumulateur de NOₓ.

12. Procédé selon la revendication 11, **caractérisé en ce qu'**en tant que paramètre de fonctionnement, l'on fixe à nouveau la durée des mesures de régénération et/ou un déroulement et/ou une position de la valeur lambda pendant les mesures de régénération et/ou une valeur-limite pour une désulfuration et/ou un chargement de NOₓ.

13. Procédé selon l'une quelconque des revendications précédentes, **caractérisé en ce que**, lors du dépassement de la valeur d'erreur au-delà de la valeur-seuil, un signal d'entretien est produit.

14. Procédé selon l'une quelconque des revendications précédentes, **caractérisé en ce que**, lors du dépassement de la valeur de correction au-delà d'une valeur de tolérance pouvant être prédéfinie, un signal d'entretien est produit.
